# EUROPEAN PATENT APPLICATION

(11) **EP 2 031 874 A2**
(43) Date of publication of application: **04.03.2009**
(21) Application number: 08100700.7
(22) Date of filing: 21.01.2008
(51) Int. Cl.: H04N 5/60, H04N 5/52, H04N 5/21

(54) **Broadcast receiving apparatus**

(30) Priority: 27.08.2007 KR 20070085977
(71) Applicant: Samsung Electronics Co., Ltd, Suwon-si, Gyeonggi-do 442-742 (KR)
(72) Inventor: Lee, Myeong-gu, Yongin-si, Gyeonggi-do (KR)
(74) Representative: Walaski, Jan Filip

(57) **Abstract**

A broadcast receiving apparatus and an audio signal filtering method thereof are provided. The broadcast receiving apparatus acquires a broadcasting scheme of a received broadcasting signal. By filtering an audio signal of the broadcasting signal or changing a tuning frequency bandwidth depending on the broadcasting scheme, the broadcast receiving apparatus can cancel interference of a neighbor video signal. Therefore, the characteristic of the audio signal can be improved to thus provide high quality sound to a user.

## Description

The present invention relates generally to a broadcast receiving apparatus and an audio signal filtering method thereof. More particularly, the present invention relates to a broadcast receiving apparatus which improves characteristics of an audio signal separated from a broadcasting signal received from a broadcasting station according to a Phase Alternation by Line system (PAL) scheme, and an audio signal processing method of the broadcast receiving apparatus.

Phase Alternation by Line system (PAL) scheme is the most widely adopted analog broadcast system together with National Television System Committee (NTSC) scheme and Sequential Couleur avec Memoire (SECAM) scheme. The PAL scheme has 625 scan lines and a field frequency of 50Hz. The PAL scheme features no distortion in the transmission by canceling the phase error observable as the colour error using a subcarrier phase alternation.

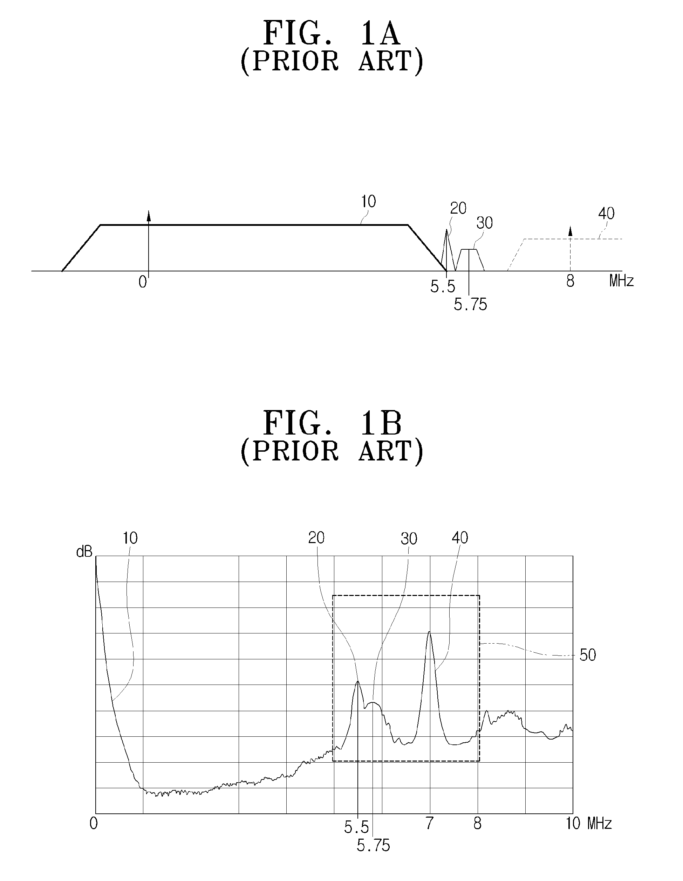

The PAL scheme includes PAL B, G, H, I, D, M and N based on the frequency bandwidth. Most of the PAL schemes excluding the PAL B have a frequency bandwidth of 8 MHz per channel as shown in FIG. 1A.

FIG. 1A is a graph of the frequency spectrum of the broadcasting signal of the PAL scheme excluding the PAL B scheme.

In FIG. 1A, the broadcasting signal of most of the PAL schemes includes a video signal 10 in a frequency band of about 0 ~ 4.5 MHz, and an analog audio signal 20 and a digital audio signal 30 in a frequency band of about 5 ~ 6.8 MHz. The total bandwidth of the broadcasting signal is 8 MHz. Accordingly, a tuner of a conventional broadcast receiving apparatus tunes and outputs the broadcasting signal based on an 8 MHz channel bandwidth. With the fixed tuning frequency band of 8 MHz, when the broadcasting signal of the PAL B scheme is received, the characteristics of the audio signals 20 and 30 in the broadcasting signal are deteriorated, which is described in more detail by referring to FIG. 1B.

FIG. 1B is a graph of the actual measurement of the frequency spectrum of the PAL B broadcasting signal.

In FIG. 1B, the broadcasting signal of the PAL B scheme has a frequency band of 7 MHz per channel. Hence, when the tuner of the conventional broadcast receiving apparatus tunes the broadcasting signal based on 8 MHz, a video signal 40 of a neighbouring channel is included in the audio area 50. As a result, since the level of the video signal 40 in the audio area 50 is quite high as shown in FIG. 1B, when the low-level audio signals 20 and 30 are input, it is hard to normally execute Automatic Gain Control (AGC).

That is, although the level of the received audio signals 20 and 30 is not high enough to process the audio signals 20 and 30, the high-level video signal 40 makes the average level of the signals 20, 30 and 40 in the audio area 50 high. Consequently, the AGC does not amplify the audio signals 20 and 30. Herein, when the low-level audio signals 20 and 30 are input, the AGC amplifies the audio signals 20 and 30 to an adequate demodulation level. If the AGC is not properly carried out, it is impossible to normally demodulate the audio signals 20 and 30. Therefore, the characteristics of the audio signals 20 and 30 are deteriorated.

As discussed above, when the conventional PAL broadcasting system collectively tunes the broadcasting signal based on 8 MHz and the broadcasting signal of the PAL B scheme is received over the frequency band of 7 MHz, the characteristics of the audio signals 20 and 30 are seriously deteriorated because of the neighbouring video signal 40.

The present invention provides a broadcast receiving apparatus for detecting a frequency bandwidth of an audio signal of a received broadcasting signal and canceling a neighbouring video signal to improve characteristics of the audio signal, and an audio signal filtering method of the broadcast receiving apparatus.

Additional aspects and/or advantages of the invention will be set forth in part in the description which follows and, in part, will be obvious from the description, or may be learned by practice of the invention.

According to an aspect of the present invention, a broadcast receiving apparatus includes a detector for comparing a level of an audio signal of a first format with a reference level and outputting a result of the comparison; and a controller for controlling to filter an audio signal of a second format according to the comparison result.

The broadcast receiving apparatus may further include a filter for low-pass filtering the audio signal of the second format. When the level of the audio signal of the first format is greater than the reference level, the controller may control to output a filtered audio signal from the filter.

The filter low-pass may filter the audio signal of the second format with 7 MHz. The audio signal of the first format may include a demodulated audio signal of the second format.

The detector may band-pass may filter the audio signal of the first format and compare the filtered signal level with the reference level.

The detector may band-pass filter the audio signal of the first format with 7 MHz.

According to an aspect of the present invention, an audio signal filtering method includes comparing a level of an audio signal of a first format with a reference level and outputting a result of the comparison; and controlling to filter an audio signal of a second format according to the comparison result.

The audio signal filtering method may further include low-pass filtering the audio signal of the second format. When the level of the audio signal of the first format is greater than the reference level, the controlling operation may control to output the filtered audio signal.

The filtering operation may low-pass filter the audio signal of the second format with 7 MHz.

The audio signal of the first format may include a demodulated audio signal of the second format.

The outputting operation may band-pass filter the audio signal of the first format and compare the filtered signal level with the reference level.

The outputting operation may band-pass filter the audio signal of the first format with 7 MHz, compare the filtered signal level with the reference level, and output the comparison result.

According to another aspect of the present invention, a broadcast receiving apparatus includes a tuner for tuning a broadcasting signal received from a broadcasting station; a detector for comparing a level of an audio signal of the broadcasting signal with a reference level and outputting a result of the comparison; and a controller for controlling the tuner to change a tuning frequency bandwidth for the broadcasting signal according to the comparison result.

When the signal level of the audio area is greater than the reference level, the controller may control the tuner to change the tuning frequency bandwidth of the tuner.

The controller may control the tuner to change the tuning frequency bandwidth of the tuner to 7 MHz.

The signal of the audio area may include a demodulated audio signal separated at the tuner.

The detector may band-pass filter the signal of the audio area and compare the filtered signal level with the reference level.

The detector may band-pass filter the signal of the audio area with the band 7 MHz.

According to another aspect of the present invention, an audio signal filtering method includes tuning a broadcasting signal received from a broadcasting station; comparing a level of an audio signal of the broadcasting signal with a reference level and outputting a result of the comparison; and controlling to change a tuning frequency bandwidth for the broadcasting signal according to the comparison result.

When the signal level of the audio area is greater than the reference level, the controlling operation may control to change the tuning frequency bandwidth.
The controlling operation may control to change the tuning frequency bandwidth to 7 MHz.

The signal of the audio area may include a demodulated audio signal separated from the tuned broadcasting signal.

The outputting operation may band-pass filter the signal of the audio area and compare the filtered signal level with the reference level.

The outputting operation may band-pass filter the signal of the audio area with the band 7 MHz.

These and/or other aspects and advantages of the invention will become apparent and more readily appreciated from the following description of the embodiments, taken in conjunction with the accompanying drawings, in which:
FIG. 1A is a graph of a frequency spectrum of a broadcasting signal of a PAL scheme excluding a PAL B scheme;
FIG. 1B is a graph of the actual measurement of the frequency spectrum of the PAL B broadcasting signal;
FIG. 2 is a simplified block diagram of a broadcast receiving apparatus according to an exemplary embodiment of the present invention;
FIG. 3 is a flowchart of operations of the broadcast receiving apparatus according to an exemplary embodiment of the present invention;
FIG. 4 is a simplified block diagram of a broadcast receiving apparatus according to another exemplary embodiment of the present invention; and
FIG. 5 is a flowchart of operations of the broadcast receiving apparatus according to another exemplary embodiment of the present invention.

Reference will now be made in detail to embodiments of the present invention, examples of which are illustrated in the accompanying drawings, wherein like reference numerals refer to the like elements throughout. The embodiments are described below in order to explain the present invention by referring to the figures.

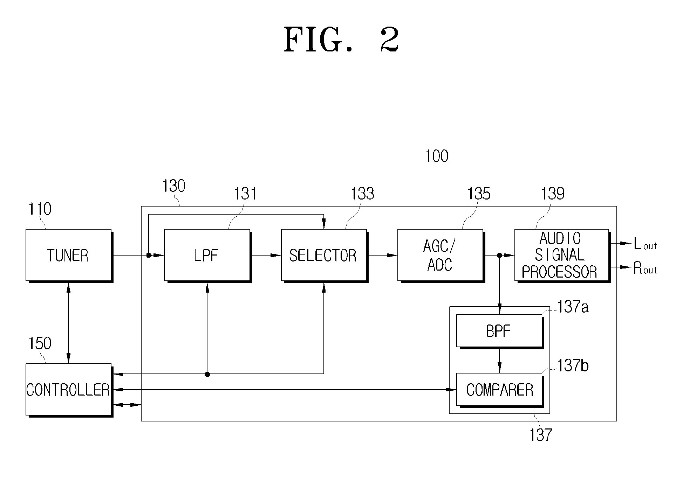

FIG. 2 is a simplified block diagram of a broadcast receiving apparatus according to an exemplary embodiment of the present invention.

The broadcast receiving apparatus 100 of FIG. 2 includes a tuner 110, an audio decoder 130, and a controller 150.

The tuner 110 receives and tunes a broadcasting signal of the PAL scheme from a broadcasting station (not shown) and outputs a video signal and an audio signal of an Intermediate Frequency (IF). Since the present invention relates to the audio signal, the processing and the structure in relation to the IF video signal output from the tuner 110 shall be omitted.

The audio decoder 130 includes a Low-Pass Filter (LPF) 131, a selector 133, an Auto Gain Controller (AGC)/Analog Digital Converter (ADC) 135, a detector 137, and an audio signal processor 139.

The LPF 131 low-pass filters the signal output from the tuner 110; that is, the signal in the audio area up to 7 MHz. When the incoming broadcasting signal is of the PAL B scheme, the LPF 131 outputs only the audio signal below 7 MHz by removing the video signal in the frequency band 7 ~ 8 MHz in the audio area under the control of the controller 150, to be explained.

The selector 133 selects one of the audio signal output from the tuner 110 and the audio signal output from the LPF 131 under the control of the controller 150. When the broadcasting signal of the PAL B scheme is input, the selector 133 selects and outputs the audio signal output from the LPF 131. When the broadcasting signal of a PAL scheme other than PAL B is input, the selector 133 selects and outputs the audio signal output from the tuner 110.

The AGC/ADC 135 demodulates the modulated audio signal to the original audio signal by automatically controlling the gain of the audio signal fed from the selector 133 and converting the signal to a digital audio signal.

The audio signal processor 139 processes the demodulated audio signal to produce a left sound Lₒᵤₜ and a right sound Rₒᵤₜ.

The detector 137 compares a level of the audio signal output from the AGC/ADC 135 with a reference level and provides the comparison result to the controller 150. The detector 137 includes a Band Pass Filter (BPF) 137a and a comparer 137b.

When the broadcasting signal of the PAL B scheme is input, since the video signal is present at 7 MHz in the audio area, the detector 137 compares the signal level of the audio area including the video signal at 7 MHz with the reference level and outputs the comparison result.

The BPF 137a band-pass filters the signal included in the audio area including the 7 MHz frequency. When the broadcasting signal of the PAL B scheme is input, the BPF 137a band-pass filters the video signal at 7 MHz in the audio area. When the broadcasting signal of a PAL scheme other than PAL B is input, there is no video signal at 7 MHz in the audio area and a signal of a lower level than the audio signal is present. In this case, the BPF 137a filters and outputs the low-level signal.

The comparer 137b compares the signal level of the audio area fed from the BPF 137a with a reference level and outputs the comparison result. The reference level includes a high level and a low level. There is a difference between the high level and the low level as a result of hysteresis. When the signal level of the audio area is higher than the high level, the comparer 137b outputs the comparison result '1'. When the signal level of the audio area is lower than the low level, the comparer 137b outputs the comparison result '0'. When the broadcasting signal of the PAL B scheme is input, the signal level of the audio area is higher than the high level. When the broadcasting signal of a PAL scheme other than PAL B is input, the signal level of the audio area is lower than the low level.

The controller 150 controls the tuner 110 to tune the broadcasting signal, and controls the audio decoder 130 to process the audio signal. According to the comparison result of the comparer 137b, the controller 150 controls the LPF 131 and the selector 133.

When the comparer 137b outputs '1', the controller 150 determines the input broadcasting signal as being a PAL B scheme signal and controls the LPF 131 to low-pass filter the signal of the audio area output from the tuner 110 around 7 MHz and to output only the audio signal by eliminating the neighbouring video signal. Next, the controller 150 controls the selector 133 to select the audio signal output from the LPF 131. By contrast, when the comparer 137b outputs '0', the controller 150 determines the input broadcasting signal as conforming to a scheme other than PAL B and controls the selector 133 to select the audio signal output from the tuner 110.
Accordingly, when the broadcasting signal of the PAL B scheme is input, the audio signal can be processed by eliminating the video signal above 7 MHz in the audio area. When the broadcasting signal of schemes other thanPAL B is input, the audio signal can be processed in the conventional way.

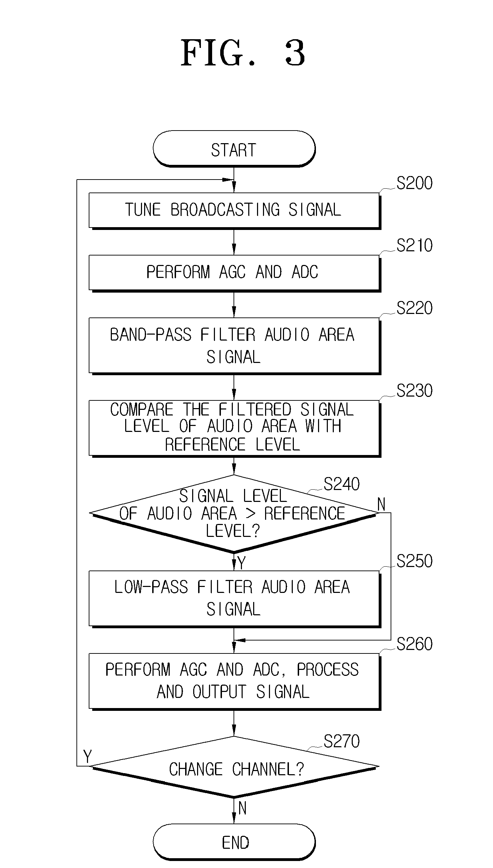

FIG. 3 is a flowchart of operations of the broadcast receiving apparatus according to an exemplary embodiment of the present invention.

In FIG. 3, when the tuner 110 tunes the broadcasting signal (S200), the tuner 110 outputs the video signal and the audio signal of the IF. When the tuner 110 tunes and outputs the broadcasting signal based on an 8 MHz channel bandwidth, the audio decoder 130 performs the AGC and the ADC with respect to the signal included in the audio area (S210). The audio decoder 130 band-pass filters and outputs the signal of the audio area including 7 MHz (S220).

The audio decoder 130 compares the filtered signal level of the audio area with the reference level (S230). The reference level may include the high level and the low level, and the lag is present between the high level and the low level by considering the hysteresis. When the signal level of the audio area is higher than the high level (S240-Y), the audio decoder 130 low-pass filters the signal of the audio area (S250).

When the signal level of the audio area is higher than the reference level, the video signal of the neighbouring channel is present in the frequency band at 7 MHz. Hence, the controller 150 determines the received broadcasting signal of the PAL B scheme. Next, the controller 150 low-pass filters the signal of the audio area output from the tuner 110 and outputs only the audio signal by eliminating the video signal above 7 MHz.

The audio decoder 130 performs the AGC and the ADC on the low-pass filtered audio signal and processes the signal (S260). That is, the audio decoder 130 produces the left sound and the right sound by processing only the audio signal below 7 MHz.

When the signal level of the audio area is not higher than the reference level (S240-N), the controller 150 determines that the received broadcasting signal conforms to a scheme other than PAL B. The audio decoder 130 performs the AGC and the ADC on the audio signal output from the tuner 110 and processes the signal (S260).

In doing so, when a channel change occurs, the operations S200 through S260 are repeated. As such, depending on the broadcasting system scheme of the received broadcasting signal, the signal of the audio area can selectively go through the low-pass filtering.

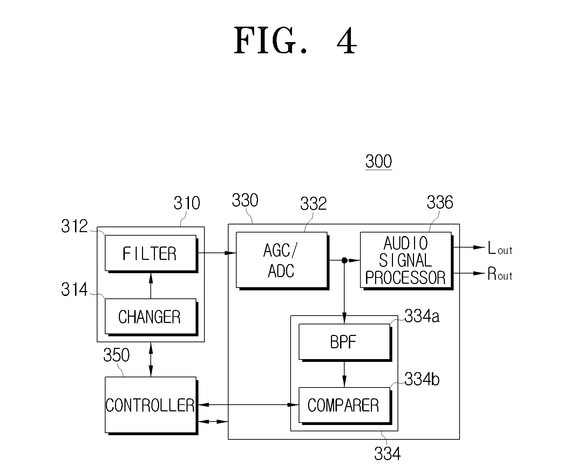

FIG. 4 is a simplified block diagram of a broadcast receiving apparatus according to another exemplary embodiment of the present invention.

The broadcast receiving apparatus 300 of FIG. 4 includes a tuner 310, an audio decoder 330, and a controller 350.

The tuner 310 receives and tunes a broadcasting signal of the PAL scheme from a broadcasting station (not shown) and outputs a video signal and an audio signal at IF. The tuner 310 includes a filter 312 and a changer 314.

The filter 312 outputs the video signal having a frequency band of about 0 ~ 5 MHz and the signal of the audio area having the frequency band of about 5 ~ 7 MHz or 8 MHz by cutting the received broadcasting signal off with the frequency bandwidth changed by the changer 314, to be explained. Since the present invention relates to the audio signal, the processing and the structure of the IF video signal output from the tuner 110 shall be omitted.

The changer 314 varies the tuning frequency bandwidth of the filter 312 to 8 MHz and 7 MHz under the control of the controller 350, to be explained. When the broadcasting signal of the PAL B scheme is received, the changer 314 varies the tuning frequency bandwidth to 7 MHz. When the broadcast signal of a scheme other than PAL B is received, the changer 314 varies the tuning frequency bandwidth to 8 MHz.

The audio decoder 330 includes an AGC/ADC 332, a detector 334, and an audio signal processor 336.

The AGC/ADC 332 automatically controls the gain of the audio area signal output from the tuner 310, converts the signal to a digital signal, and thus demodulates the modulated audio signal to the original audio signal.

The audio signal processor 336 processes the demodulated audio signal and produces as left sound Lₒᵤₜ and right sound Rₒᵤₜ.

The detector 334 compares a level of the audio area signal output from the AGC/ADC 332 with a reference level and provides the comparison result to the controller 350. The detector 334 includes a BPF 334a and a comparer 334b.

The BPF 334a band-pass filters the audio area signal around 7 MHz. When the broadcasting signal of the PAL B scheme is input, the BPF 334a band-pass filters the video signal at 7 MHz in the audio area. When the broadcasting signal of a PAL scheme other than PAL B is input, there is no video signal at 7 MHz in the audio area and a signal of a lower level than the audio signal is present. In this case, the BPF 334a filters and outputs the low-level signal.

The comparer 334b compares the signal level of the audio area fed from the BPF 334a with a reference level and outputs the comparison result. The reference level includes a high level and a low level. There is a lag between the high level and the low level in consideration of the hysteresis. When the signal level of the audio area is higher than the high level, the comparer 334b outputs the comparison result '1'. When the signal level of the audio area is lower than the low level, the comparer 334b outputs the comparison result '0'.

The controller 350 controls the tuner 310 to tune the broadcasting signal with the tuning frequency bandwidth of 7 MHz or 8 MHz, and controls the audio decoder 303 to process and output the audio signal. Depending on the comparison result output from the comparer 334b, the controller 350 controls the tuner 310 to tune the signal.

When the comparer 334b outputs '1', the controller 350 determines the input broadcasting signal as conforming to the PAL B scheme and controls the tuner 310 to cut the received broadcasting signal off based on a channel bandwidth of 7 MHz. By contrast, when the comparer 334 outputs '0', the controller 350 determines the input broadcasting signal as conforming to a scheme other than PAL B and controls the tuner 310 to cut the received broadcasting signal off based on a channel bandwidth of 8 MHz.

Hence, when the broadcasting signal of the PAL B scheme is input, the video signal above 7 MHz in the audio area is eliminated. When the broadcasting signal of a scheme other than PAL B is input, the signal in the frequency band up to 8 MHz is output.

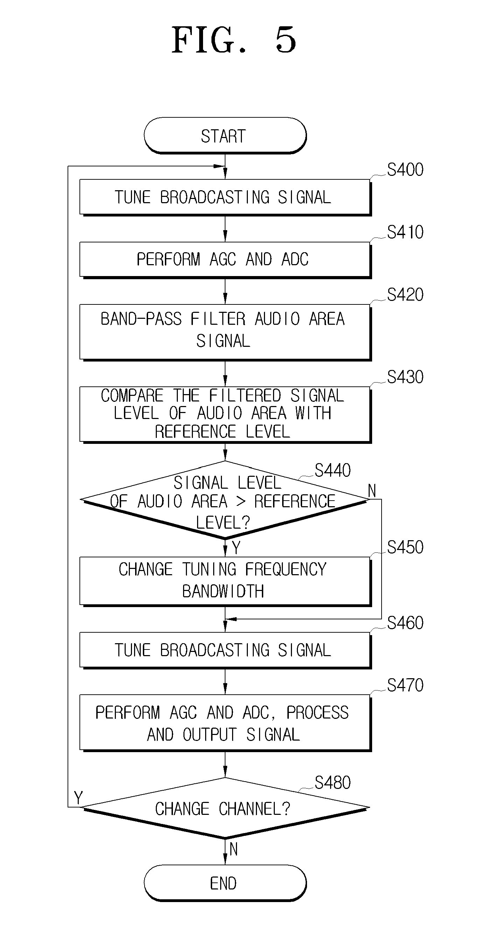

FIG. 5 is a flowchart of operations of the broadcast receiving apparatus according to another exemplary embodiment of the present invention.

In FIG. 5, when the tuner 310 tunes the broadcasting signal (S400), the video signal and the audio signal of the IF are output from the tuner 310. At this time, the tuner 310 tunes the broadcasting signal with the bandwidth of 8 MHz.

The audio decoder 330 performs the AGC and the ADC with respect to the audio area signal output from the tuner 310 (S410) and band-pass filters the audio area signal around 7 MHz (S420).

The audio decoder 330 compares the filtered signal level of the audio area with the reference level (S430). The reference level can include the high level and the low level. There is the lag between the high level and the low level by considering the hysteresis. When the signal level of the audio area is higher than the reference level (S440-Y), the controller 350 changes the tuning frequency bandwidth of the tuner 310 (S450). The tuner 310 tunes the broadcasting signal with the changed tuning frequency bandwidth (S460).

When the signal level of the audio area is higher than the reference level, the video signal of the neighbouring channel is present in the frequency band at 7 MHz. Hence, the controller 350 determines the received broadcasting signal to conform to the PAL B scheme. Next, the controller 350 controls the tuner 310 to cut the received broadcasting signal off with the frequency bandwidth of 7 MHz.

The audio decoder 330 performs the AGC and the ADC on the audio signal output from the tuner 310, processes and outputs the audio signal (S470). That is, the audio decoder 330 processes only the audio signal below 7 MHz and produces the left sound and the right sound.

When the signal level of the audio area is not higher than the reference level (S440-N), the controller 350 determines the received broadcasting signal to conform to a scheme other than PAL B and controls the tuner 310 to cut the received broadcasting signal off with the existing frequency bandwidth of 8 MHz (S460). The audio decoder 330 performs the AGC and the ADC on the audio signal output from the tuner 310, processes and outputs the audio signal (S470).

In doing so, when the channel is changed (S480), the operations S400 through S470 are repeated. As such, depending on the broadcasting system scheme of the received broadcasting signal, the broadcasting signal can be tuned by changing the tuning frequency bandwidth.

As set forth above, the characteristics of the audio signal can be improved by detecting the frequency bandwidth of the audio signal of the received broadcasting signal and canceling the neighbouring video signal of the audio signal based on the broadcasting system scheme.

The skilled person would understand that the system can be adapted for other standards, such as PAL M, N which use a 6MHz channel bandwidth.

Although a few embodiments of the present invention have been shown and described, it would be appreciated by those skilled in the art that changes may be made in this embodiment without departing from the principles of the invention, the scope of which is defined in the claims.

## Claims

1. A broadcast receiving apparatus comprising:
a tuner (110, 310) for tuning to a broadcast channel including an audio signal, the channel having a channel bandwidth;
a detector (137, 334) for comparing a level of a signal in an audio area that comprises a predetermined portion of the channel frequency band with a reference level; and
means (131, 150, 310, 350) for processing the audio signal in dependence on the result of the comparison.

2. The broadcast receiving apparatus of claim 1, wherein the processing means comprises:
a filter (131) for low-pass filtering a signal input from the tuner (110); and
a controller (150) arranged to select between an output of the tuner (110) and an output of the filter (131) in dependence on the result of the comparison.

3. The broadcast receiving apparatus of claim 2, wherein the controller is arranged to select the output of the filter when the level of the signal in the audio area is greater than the reference level.

4. The broadcast receiving apparatus of any one of the preceding claims, wherein the filter is a low-pass filter arranged to cut-off signals above 7 MHz.

5. The broadcast receiving apparatus of claim 1, wherein the processing means comprises:
a controller (350) for controlling the tuner (310) to change a tuning channel bandwidth for the broadcasting signal in dependence on the result of the comparison.

6. The broadcast receiving apparatus of claim 5, wherein, when the signal level of the signal in the audio area is greater than the reference level, the controller is arranged to control the tuner to change the tuning channel bandwidth of the tuner.

7. The broadcast receiving apparatus of claim 6, wherein the controller is arranged to control the tuner to change the tuning channel bandwidth of the tuner to a 7 MHz channel bandwidth from an 8MHz channel bandwidth.

8. The broadcast receiving apparatus of any one of the preceding claims, wherein the signal in the audio area includes the audio signal after demodulation.

9. The broadcast receiving apparatus of any one of the preceding claims, wherein the detector comprises:
a band-pass filter (137a, 334a) for providing a band-pass filterd signal; and
a comparer (137b, 334b) for comparing the filtered signal level with the reference level.

10. The broadcast receiving apparatus of claim 9, wherein the band-pass filter has a centre frequency around 7 MHz.

11. A method of processing an audio signal comprising:
tuning to a broadcast channel including an audio signal, the channel having a channel bandwidth;
comparing a level of a signal in an audio area that comprises a predetermined portion of the channel frequency band with a reference level; and
processing the audio signal in dependence on the result of the comparison.

12. The method of claim 11, comprising:
low-pass filtering a tuned input signal; and
selecting between the tuned input signal and the filtered tuned input signal in dependence on the result of the comparison.

13. The method of claim 12, comprising selecting the filtered tuned input signal when the level of the signal in the audio area is greater than the reference level.

14. The method of any one of claims 11 to 13, comprising cutting off signals between 7 MHz and 8MHz.

15. The method of claim 11, comprising changing a tuning channel bandwidth for the broadcast channel in dependence on the result of the comparison.

16. The method of claim 15, comprising changing the tuning channel bandwidth when the signal level of the signal in the audio area is greater than the reference level.

17. The method of claim 15 or 16, comprising changing the tuning channel bandwidth to 7 MHz from 8MHz.

18. The method of any one of claims 11 to 17, wherein the signal in the audio area comprises a demodulated audio signal separated from the tuned broadcasting signal.

19. The method of any one of the preceding claims, comprising band-pass filtering the signal in the audio area to determine the level of the signal.

20. The method of claim 19, comprising band-pass filtering the signal in the audio area including a frequency band around 7 MHz.
